# EUROPEAN PATENT SPECIFICATION

(11) **EP 3 859 643 B1**
(45) Date of publication and mention of the grant of the patent: **02.09.2026**
(21) Application number: 19897086.5
(22) Date of filing: 08.07.2019
(51) Int. Cl.: G06Q 20/32, G06Q 20/38

(54) **DATA PROCESSING METHOD IMPLEMENTED BASED ON NFC TAG, SYSTEM AND TAG RECEIVING TERMINAL THEREOF**
AUF DER GRUNDLAGE EINES NFC-TAGS IMPLEMENTIERTES DATENVERARBEITUNGSVERFAHREN, SYSTEM UND TAG-EMPFANGENDES ENDGERÄT DAFÜR
PROCÉDÉ DE TRAITEMENT DE DONNÉES BASÉ SUR UNE ÉTIQUETTE NFC ET SYSTÈME LE METTANT EN OEUVRE, ET TERMINAL DE BÉNÉFICIAIRE À BASE D'ÉTIQUETTE

(30) Priority: 12.12.2018 CN 201811516955
(43) Date of publication of application: 04.08.2021
(73) Proprietor: China Unionpay Co., Ltd, Shanghai 200135 (CN)
(72) Inventor: LU, Zhijun, Shanghai 200135 (CN); JIANG, Haijian, Shanghai 200135 (CN); LIU, Gang, Shanghai 200135 (CN); LIN, Jinren, Shanghai 200135 (CN); CAI, Hua, Shanghai 200135 (CN); ZHANG, Zheng, Shanghai 200135 (CN); JIN, Kewei, Shanghai 200135 (CN); XIA, Qin, Shanghai 200135 (CN)
(74) Representative: Grünecker Patent- und Rechtsanwälte PartG mbB
(86) International application number: PCT/CN2019/094981
(87) International publication number: WO 2020/119095

(56) References cited:
- CN-A- 105 279 645
- CN-A- 106 096 950
- CN-A- 107 909 365
- CN-A- 108 334 927
- CN-A- 108 334 927
- KR-A- 20160 135 864
- US-A1- 2007 170 243
- US-A1- 2015 162 956
- US-A1- 2016 260 303
- US-A1- 2017 221 056
- US-A9- 2016 292 667

## Description

### CROSS-REFERENCE TO RELATED APPLICATION(S)

This application claims priority to a Chinese patent application No. 201811516955.7, filed on December 12, 2018.

### FIELD OF THE INVENTION

The invention relates to the computer technology, and in particular, to a data processing method implemented based on NFC tag, a system and a computer readable medium.

### BACKGROUND OF THE INVENTION

In carrying out the NFC tag payment project and on trial of relevant products, it is discovered that there are improvements still to be made in the tag payment acceptance environment. For example, the existing NFC tag payment scheme is as follows: after the user's mobile phone terminal comes close to the NFC tag, the user enters transaction amount on the mobile phone terminal (for the case of a tag of a variable amount) to complete payment, which increases the complexity of user operation, degrades the user's payment experience, and increases difficulty for a merchant to confirm payment.

US 2016/260303 A1 concerns implementing systems and methods for operating a security tag. The customer scans each article using a retail transaction application installed on a Mobile Communication Device ("MCD"), e.g. a mobile phone, inputs payment information into the MCD and uses a web-based payment service to purchase. Once the purchase transaction is completed, the web-based payment service system sends a purchase token to the MCD and/or security tags. The MCD then informs a corporate server via a secure communications link, wherein the corporate verifies the purchase with the web-based payment service, generates and sends an instruction for detach through a retail store server to the security tags. Thus, US 2016/260303 A1 discloses a data processing method implemented based on a near-field communication tag, NFC tag, in a system comprising a peripheral device, PD, for receiving a tag, and a MCD, e.g. a mobile phone as a handheld payment terminal, and a tag payment system comprising a web-based payment system, a corporate facility server and a retail store facility server, said method comprising: acquiring, by the PD, an amount data of individual products from the NFC tag acquisition step to acquire amount data; providing, by the PD, the amount data to the MCD; establishing, by the MCD, using customer inputs and scanned amount data, a transaction session with a web-based payment system; completing, by the handheld payment terminal, e payment processing based on the (original) NFC tag, whereby a purchase token is generated by the tag payment system; and, changing, by the tag payment system, and change the payment state under the condition that the payment is successful, by verifying a purchase token from the web-based payment system by the corporate facility server, so that the retail store facility server can cause the release of security tags.

US 2016/292667 A9 relates to systems, methods, processes, processes, computer program code, and means for employing the near field communication ("NFC") functionality of mobile devices for use in payment transaction, wherein the system comprises a NFC device, a point of transaction device, a transaction management system, and a handheld payment terminal; and both the dynamic checkout token and static checkout token are utilized in the transaction system.

The information disclosed in the background section of the invention is intended merely to increase the understanding of the overall background of the invention and should not be taken as an admission or a suggestion in any form that such information constitutes prior art known to those of ordinary skill in the art.

### SUMMARY OF THE INVENTION

In view of the above, for the above issues, it is intended to provide a data processing method, a system and a computer readable medium, when executed by a processor, implementing the data processing method, without the disadvantages in the prior art.

The problem is solved by the data processing method according to claim 1 and by the data processing system according to claim 3.

The computer readable medium according to one aspect of the invention having stored thereon a computer program, wherein the computer program, when executed by a processor, implements one of the claimed data processing methods.

As described above, the data processing method implemented based on NFC tag and the data processing system based on NFC tag according to embodiments of the present invention allow the handheld payment terminal to receive the amount data and the do not require the user to enter the transaction amount on the mobile phone terminal, but rather let the merchant enter the transaction amount and update it into the NFC tag, thereby reducing the complexity of user operation, enhancing the user's payment experience, and meanwhile, reducing the difficulty for the merchant to confirm payment, and the experience of both the user side and the merchant side can be improved at the same time.

Other features and advantages of the methods and apparatus of the embodiments will more specifically become apparent or be illuminated by the accompanying drawings and the subsequent specific embodiments for illustrating certain principles of embodiments of the invention in conjunction with the accompanying drawings incorporated herein.

### BRIEF DESCRIPTION OF THE DRAWINGS

FIG. 1 is a flow chart representing the data processing method implemented based on NFC tag of one embodiment of the present invention.
FIG. 2 is a block diagram representing the data system implemented based on NFC tag of one embodiment of the present invention.
FIG. 3 is a flow chart representing the data processing method implemented based on NFC tag of another embodiment of the present invention.
FIG. 4 is a block diagram representing the data system implemented based on NFC tag of another embodiment of the present invention.

### DETAILED DESCRIPTION OF THE EMBODIMENT(S) OF THE INVENTION

The following introduces some of the various embodiments of the invention and is intended to provide a basic understanding of the invention.

Firstly, the data processing method implemented based on NFC tag and the data processing system implemented based on the NFC tag of one embodiment of the invention are described.

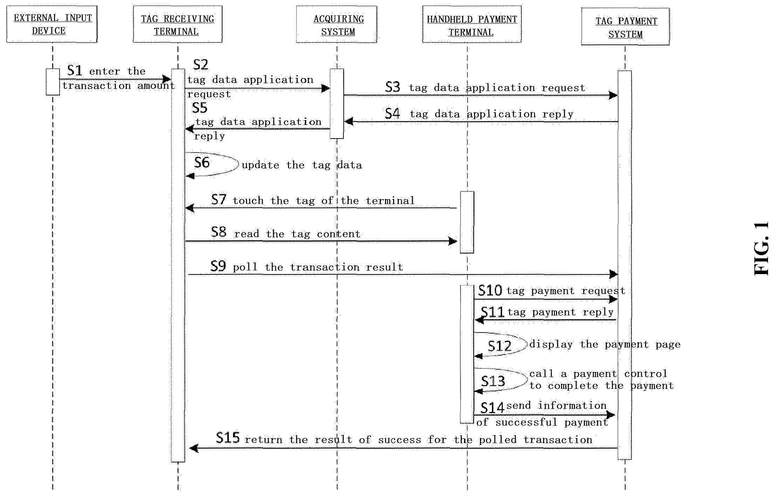

FIG. 1 is a flow chart representing the data processing method implemented based on NFC tag of one embodiment of the present invention.

The data processing method implemented based on NFC tag of one embodiment of the invention relates to an online payment method implemented based on NFC tag. In this embodiment, the online payment method is implemented by an external input device, a tag receiving terminal, an acquiring system, a handheld payment terminal (e.g., a mobile terminal of a user making a payment), and a tag payment system.

The NFC tag in the tag receiving terminal is stored with tag data, including initiating mode transaction currency, country code, merchant name, merchant city, merchant MCC, merchant number, transaction amount, tag ID, etc., where the transaction amount is determined by the merchant input. For example, there may be initiation mode "31", transaction currency "156", country code "CN", merchant name "ABC", merchant city "shanghai", merchant MCC "5311", merchant number "2500034400020344500034453110004" (the latter 15 bits are the merchant identification number), transaction amount "0.00", the institution code "220330", and tag ID "456".

As shown in FIG. 1, the data processing method based on NFC tag of one embodiment of the present invention comprises:
Step S1: the merchant enters the transaction amount "100.00" through the external input device and makes confirmation;
Step S2: the tag receiving terminal receives transaction amount information, generates a merchant custom order number, such as "100200", through an MCU it is equipped with, sends a tag data application request to the acquiring system; herein, the custom order number is used for identifying this transaction, the payment state for the custom order number is set to an unpaid state when the transaction has not been paid, and is set to a state of successful payment after the transaction is completed;
Step S3: the acquiring system sends the tag data application request to the tag payment system, wherein the request element mainly includes, for example, merchant identification number "500034453110004" (the merchant identification number here is by truncating a part of the merchant number "2500034400020344500034453110004"), institution code "220330", tag ID "456", merchant custom order number "100200", and transaction amount "100.00" (wherein, information such as the merchant identification number, the institution code, the tag ID and the like are equivalent to "original NFC tag data");
Step S4: the tag payment system processes the tag data application request, saves the merchant custom order number "100200" and saves the payment state for the custom order number as unset, and sets the tag data to the valid state, and additionally may selectively set a validity period for the tag data, such as "1 day", for example, and then sends a tag data application reply to the acquiring system;
Step S5: the acquiring system forwards the tag data application reply to the tag receiving terminal;
Step S6: after receiving the tag data application reply, the tag receiving terminal updates the transaction amount "100.00" into the tag data of the tag receiving terminal through the MCU it is equipped with, and prompts the user to touch the tag receiving terminal, such as by a voice prompt or an indicator light prompt;
Step S7: the user makes the handheld payment terminal touch a designated location of the tag receiving terminal and read the updated tag data in Step S8, such as initiation mode "31", transaction currency "156", country code "CN", merchant name "ABC", merchant city "shanghai", merchant MCC "5311", merchant number "2500034400020344500034453110004" (the latter 15 bits are the merchant identification number), transaction amount "100.00", institution code "220330", tag ID "456"; and compose an access link in a specific format, for example, composing a link using the content in the updated tag data in the format of https://nfc.123.com/nfctag/<Method Name>?<Parameter Name>=<Value> to call a tag payment page. Specifically, the format may be https://nfc.123.com/nfctag/<A>?<Tag Content 1>=<Value 1>&<Tag Content 2>=<Value 2>&...&<Tag Content n>=<Value n>, wherein the tag content 1 through n and values 1 through n are not original content but correspond to parameter values of the original content;
Step S9: after the updated NFC tag of the tag receiving terminal is read, polling the payment state of the merchant custom order number "100200" to judge the transaction result, such as querying the tag payment system every 0.5 second about whether the payment state of the merchant custom order number "100200" is "paid";
Step S10: the handheld payment terminal sends a tag payment request to the tag payment system;
Step S11: after the tag payment system carries out legality verification on the tag data, returning a tag payment reply, wherein the legality verification refers to judging whether the uploaded tag data is consistent with the data stored by the tag payment system;
Step S12: the handheld payment terminal receives the tag payment reply, and displays the payment page under the condition that the legality verification is passed;
Step S13: after the user confirms the payment information, call a payment control to complete payment through the handheld payment terminal;
Step S14: the handheld payment terminal sends information of successful payment to the tag payment system;
Step S15: when the tag receiving terminal queries that the order is paid successfully in the tag payment system, feedback the information of successful payment, such as feeding back "merchant order '100200 ', 100 yuan received' by voice.

Next, the data processing system implemented based on NFC tag of one embodiment of the present invention will be illustrated.

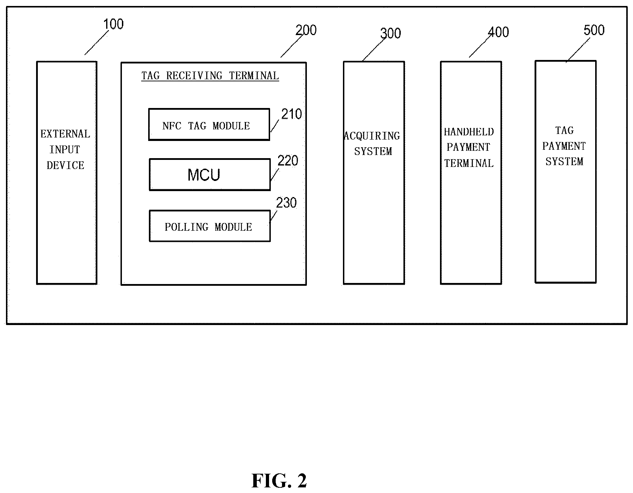

FIG. 2 is a block diagram representing the data system implemented based on NFC tag of one embodiment of the present invention.

As shown in FIG. 2, the data processing system implemented based on NFC tag of one embodiment of the present invention is provided with: an external input device 100, a tag receiving terminal 200, a handheld payment terminal 300, an acquiring system 400, and a tag payment system 500.

Wherein the external input device 100 is used for inputting amount data and providing the data to the tag receiving terminal.

The tag receiving terminal 200 is provided with:
an NFC tag module 210 for storing NFC tag data;
an MCU 220 for generating a custom order number for identifying a transaction, wherein the payment state for the custom order number is set to be an unpaid state when the transaction is not paid, and on the other hand, for issuing a tag data application request to the tag payment system based on original NFC tag data, amount data provided by the external input device, and the custom order number to acquire updated NFC tag data as described below, and for updating an NFC tag in the NFC tag module based on the updated NFC tag data as described below acquired from the tag payment system to generate an updated NFC tag, wherein the updated NFC tag includes the amount data; and
a polling module 230 for judging whether payment processing based on the updated NFC tag has been made by polling a payment state for the custom order number in the tag payment system based on the custom order number.

Wherein the tag payment system 500 is for generating the updated NFC tag data according to the tag data application request from the tag receiving terminal and saving the custom order number, and for setting the payment state for the custom order number as an unpaid state; and on the other hand, changing the payment state for the custom order number into a state of successful payment when the transaction corresponding to the custom order number is paid successfully.

The handheld payment terminal 300 is for reading the updated NFC tag from the tag receiving terminal and completing payment processing based on the updated NFC tag.

The acquiring system 400 is disposed between the tag receiving terminal 200 and the tag payment system 500 and is for communicatively connecting the two, and the acquiring system 400 may also, of course, be omitted when the tag receiving terminal 200 and the tag payment system 500 are in direct communicative connection.

Next, the data processing method implemented based on NFC tag of another embodiment of the present invention and the data processing system thereof will be illustrated.

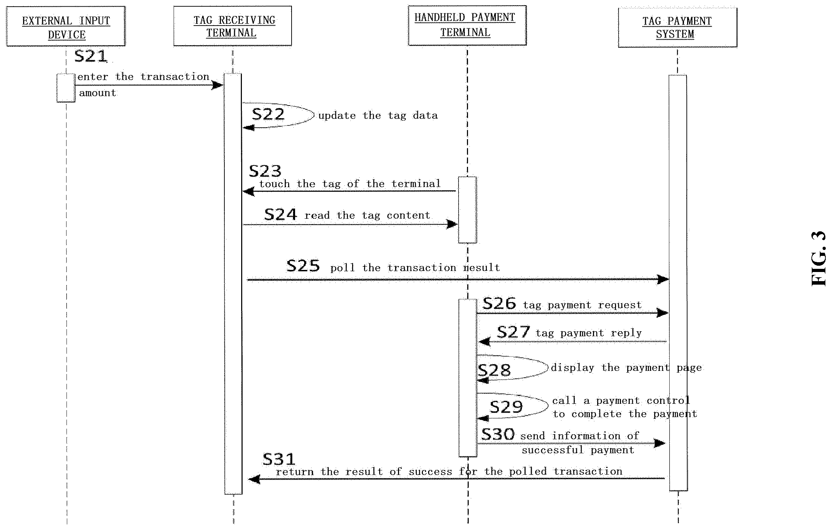

FIG. 3 is a flow chart representing the data processing method implemented based on NFC tag of another embodiment of the present invention.

The data processing method implemented based on NFC tag of another embodiment of the invention relates to an offline payment method implemented based on NFC tag. In this embodiment, the offline payment method is implemented by an external input device, a tag receiving terminal, an acquiring system, a handheld payment terminal (equivalent to the mobile phone of a user), and a tag payment system.

Step S21: the merchant enters the transaction amount "100.00" through the external input device and makes confirmation;
Step S22: after receiving the transaction amount information, the tag receiving terminal generates a merchant custom order number "100200", and updates or writes the transaction amount "100.00" and the merchant custom order number "100200" into the tag data through the MCU, and then prompts the user to touch the tag receiving terminal, such as by a voice prompt or an indicator light prompt; wherein the custom order number is used to identify the transaction, the payment state for the custom order number is set to be an unpaid state when the transaction is not paid, and is set to be a state of successful payment after the transaction is completed;
Step S23: the user makes the handheld payment terminal touch a designated location of the tag receiving terminal;
Step S24: here, what is different from the previous embodiments is that, the tag receiving terminal is stored with a private key of the merchant, and the tag payment system is stored with a public key of the merchant; as an example, a Hash operation is performed on the tag data to acquire a Hash value "hash0", the "hash0" is then encrypted using the merchant private key to acquire encrypted data "abcd"; when the user makes the handheld payment terminal touch the designated location of the tag receiving terminal and read the encrypted data and tag data, here the tag data may be, for example, initiation mode "31", transaction currency "156", country code "CN", merchant name "ABC", merchant city "shanghai", merchant MCC "5311", merchant number "2500034400020344500034453110004" (the latter 15 bits are the merchant identification number), transaction amount "100.00", institution code "220330", tag ID "456", and the like; and compose an access link in a specific format, for example, composing a link using the content in the tag data in the format of https://nfc.123.com/nfctag/<Method Name>?<Parameter Name>=<Value> to call a tag payment page. Specifically, the format may be https://nfc.123.com/nfctag/<A>?<Tag Content 1>=<Value 1>&<Tag Content 2>=<Value 2>&...&<Tag Content n>=<Value n>, wherein the tag content 1 through n and values 1 through n are not original content but correspond to parameter values of the original content;
Step S25: after the NFC tag of the tag receiving terminal is read, polling the transaction result from the tag payment system by querying the payment state of the merchant custom order number "100200", such as querying the tag payment system every 0.5 second about whether the payment state of the merchant custom order number "100200" is state of successful payment;
Step S26: the handheld payment terminal sends a tag payment request to the tag payment system, wherein the encrypted data "abcd" and the unencrypted tag data are sent by the handheld phone payment terminal to the tag payment system; moreover, the merchant custom order number "100200" is also sent to the tag payment system along with the tag payment request; here, as the custom order number "100200" is not paid, its payment state is an unpaid state (alternatively, the payment state may also be set to the unpaid state in step S27 by the tag payment system after receiving the custom order number "100200");
Step S27: after the tag payment system carries out legality verification on the tag data, returning a tag payment reply, wherein the legality verification comprises, for example, the steps of: the tag payment system decrypting the encrypted data "abcd" with the public key of the merchant, acquiring a decrypted Hash value "hash1" after successful decryption, then carrying out Hash operation on the unencrypted tag data using the same Hash operation to acquire a Hash value "hash2", and under the condition that "hash1" is equivalent to "hash2", it indicates that the tag data is not falsified, i.e., the tag payment request is legal;
Step S28: the handheld payment terminal receives the tag payment reply, and displays the payment page under the condition that the legality verification is passed;
Step S29: after the user confirms the payment information, call a payment control to complete payment through the handheld payment terminal;
Step S30: the handheld payment terminal sends information of successful payment to the tag payment system, and the tag payment system changes the payment state for the custom order number "100200" to the state of successful payment;
Step S31: when the tag receiving terminal queries that the payment state for the custom order number in the tag payment system is "successful payment", feedback the information of successful payment, such as feeding back "merchant order '100200 ', 100 yuan received' by voice.

Comparing the embodiments, the differences lie in that:
(1) in the latter embodiment, after receiving the transaction amount information, the tag receiving terminal generates a merchant custom order number "100200", and updates or writes the transaction amount "100.00" and the merchant custom order number "100200" into the tag data through the MCU, and then prompts the user to touch the tag receiving terminal, such as by a voice prompt or an indicator light prompt;
(2) in the latter embodiment, the tag receiving terminal is stored with a private key of the merchant, and the tag payment system is stored with a public key of the merchant. In general, a Hash operation is performed on the overall tag data to acquire a Hash value "hash0", the "hash0" is then encrypted using the merchant private key to acquire the encrypted data "abcd"; and after the encrypted data "abcd" is read by the mobile phone through NFC, the encrypted data "abcd" and the unencrypted tag data are sent by the mobile phone payment terminal to the tag payment system during sending the tag payment request. The tag payment system decrypts the encrypted data "abcd" with the public key of the merchant, and acquires a decrypted Hash value "hash1" after successful decryption, then carries out Hash operation on the unencrypted tag data using the same Hash operation to acquire a Hash value "hash2", and under the condition that "hash1" is equivalent to "hash2", it indicates that the tag data is not falsified, i.e., the tag payment request is legal;
(3) in the latter embodiment, the merchant custom order number "100200" will also be sent through the tag payment request process.

Next, the data processing system implemented based on NFC tag of another embodiment of the present invention will be illustrated.

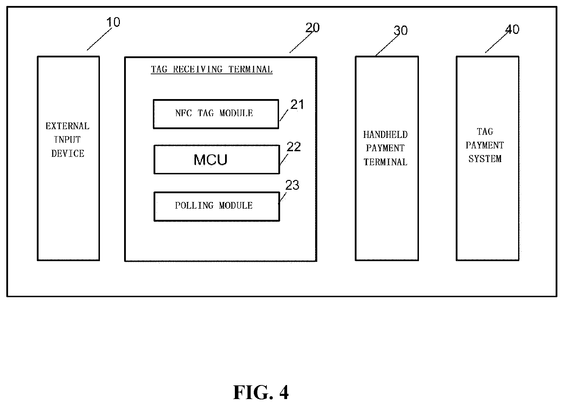

FIG. 4 is a block diagram representing the data system implemented based on NFC tag of another embodiment of the present invention.

The data system implemented based on NFC tag of another embodiment of the present invention is provided with: an external input device 10, a tag receiving terminal 20, a handheld payment terminal 30, and a tag payment system 40.

The external input device 10 is for inputting the amount data and providing the amount data to the tag receiving terminal 20.

The tag receiving terminal 20 is provided with:
an NFC tag module 21 for storing NFC tag data;
an MCU 22 for generating a custom order number for identifying a transaction, wherein the payment state for the custom order number is set to be an unpaid state when the transaction is not paid, and on the other hand, for updating the amount data and the custom order number into the NFC tag data stored in the NFC tag module to generate an updated NFC tag; and
a polling module 23 for judging whether payment processing based on the updated NFC tag is performed by polling the payment state for the custom order number in the tag payment system.

The handheld payment terminal 30 is for reading the updated NFC tag, issuing a payment request to the tag payment system 40 based on the updated NFC tag, and receiving a payment reply from the tag payment system 40, wherein, the payment request also includes the custom order number and the payment state for the custom order number.

The tag payment system 40 is for receiving the payment request from the handheld payment terminal 30 and returning a payment reply to the handheld payment terminal 30, and changing the payment state for the custom order number to a state of successful payment when the transaction corresponding to the custom order number is paid successfully.

The data processing method implemented based on NFC tag and the data processing system based on NFC tag according to embodiments of the invention do not require a user to enter a transaction amount on the mobile phone terminal, but instead the transaction amount is input by the merchant and updated into the NFC tag, thereby reducing the complexity of user operation, enhancing the user's payment experience, and meanwhile, reducing the difficulty for the merchant to confirm payment, and the experience at both the user side and the merchant side can be improved at the same time.

The above example mainly illustrates the data processing method implemented based on NFC tag and the data processing system based on NFC tag according to embodiments of the invention.

## Claims

1. A data processing method implemented based on a near-field communication tag, NFC tag, in a system comprising an external input device (100), a tag receiving terminal (200), a handheld payment terminal (400) and a tag payment system (500), wherein the tag receiving terminal (200) comprises a microcontroller unit, MCU (220), and an NFC tag module (210) configured to store NFC tag data, said method comprising:
acquiring (S1), by the external input device (100), amount data;
providing, by the external input device (100), the amount data to the tag receiving terminal (200);
generating, by the MCU (220) of the tag receiving terminal (200), a custom order number for identifying a transaction, wherein a payment state for the custom order number is set to be an unpaid state when the transaction is not paid, and is set to be a state of successful payment after the transaction is completed;
issuing (S2), by the tag receiving terminal (200) and to the tag payment system (500), a tag data application request based on original NFC tag data, the acquired amount data and the custom order number;
generating and replying (S4), by the tag payment system (500), updated NFC tag data based on the tag data application request, wherein the updated NFC tag data includes the amount data while the original NFC tag data does not include the amount data;
saving, by the tag payment system (500), the custom order number; and
setting, by the tag payment system (500), the payment state for the custom order number to be the unpaid state;
receiving, by the tag receiving terminal (200), the updated NFC tag data;
generating, by the MCU (220) of the tag receiving terminal (200), an updated NFC tag based on the updated NFC tag data, wherein the updated NFC tag includes the amount data;
reading (S8) the updated NFC tag by the handheld payment terminal (300);
completing (S13), by the handheld payment terminal (300), payment processing based on the updated NFC tag; and
changing, by the tag payment system (500), the payment state for the custom order number to the state of successful payment under the condition that the payment is successful.

2. The data processing method of claim **1,** further comprising after the step of reading the updated tag:
polling, by the tag receiving terminal (200), to judge whether the payment processing based on the updated NFC tag is performed by polling the payment state for the custom order number based on the custom order number.

3. A data processing system implemented based on a near-field communication tag, NFC tag, comprising: an external input device (100), a tag receiving terminal (200), a handheld payment terminal (400) and a tag payment system (500),
the external input device (100) being configured to acquire input amount data and to provide the amount data to the tag receiving terminal (200),
the tag receiving terminal (200) comprising:
an NFC tag module (210) configured to store NFC tag data;
a microcontroller unit, MCU (220) configured to generate a custom order number for identifying a transaction, wherein a payment state for the custom order number is set to be an unpaid state when the transaction is not paid, to issue a tag data application request to the tag payment system (500) based on original NFC tag data, the amount data provided by the external input device (100), and the custom order number, and to update the NFC tag in the NFC tag module (210) based on the updated NFC tag data acquired from the tag payment system (500) to generate an updated NFC tag, wherein the updated NFC tag includes the amount data, and wherein the updated NFC tag data includes the amount data while the original NFC tag data does not include the amount data
the tag payment system (500) being configured to generate the updated NFC tag data according to the tag data application request from the tag receiving terminal (200) and to save the custom order number, and to set the payment state for the custom order number as an unpaid state; and to change the payment state for the custom order number into a state of successful payment when the transaction corresponding to the custom order number is paid successfully,
the handheld payment terminal (400) configured to read the updated NFC tag from the tag receiving terminal (200) and to complete payment processing based on the updated NFC tag.

4. The data processing system of claim 3, wherein the tag receiving terminal
further comprises:
a polling module (230) for judging whether the payment processing based on the updated NFC tag is performed by polling the payment state for the custom order number in the tag payment system (200) based on the custom order number.

5. A computer readable medium having stored thereon a computer program, wherein, the computer program, when executed by a processor, implements the data processing method according to any one of claims 1 or 2.

## Patentansprüche

1. Datenverarbeitungsverfahren, implementiert auf Basis eines NFC-Tags in einem System, das eine externe Eingabevorrichtung (100), ein Tag-Aufnahmeterminal (200), ein tragbares Zahlungsterminal (400) sowie ein Tag-Zahlungssystem (500) umfasst, wobei das Tag-Aufnahmeterminal (200) eine Mikrocontroller-Einheit (220) sowie ein NFC-Tag-Modul (210) umfasst, das zum Speichern von NFC-Tag-Daten konfiguriert ist, wobei das Verfahren umfasst:
Erfassen (S1) von Betragsdaten mittels der externen Eingabevorrichtung (100);
Bereitstellen der Betragsdaten für das Tag-Aufnahmeterminal (200) durch die externe Eingabevorrichtung (100);
Erzeugen einer individuellen Auftragsnummer zum Identifizieren einer Transaktion durch die Mikrocontroller-Einheit (220), wobei ein Zahlungsstatus für die individuelle Auftragsnummer auf einen Status "Unbezahlt" gesetzt ist, wenn die Zahlung für die Transaktion offen ist, und auf einen Status "Zahlung erfolgt" gesetzt wird, nachdem die Transaktion abgeschlossen ist;
Ausgeben (S2) einer Anforderung zur Anwendung von Tag-Daten durch das Tag-Aufnahmeterminal (200) an das Tag-Zahlungssystem (500) auf Basis originaler NFC-Tag-Daten, der erfassten Betragsdaten sowie der individuellen Auftragsnummer;
Erzeugen und Rückmelden (S4) aktualisierter NFC-Tag-Daten auf Basis der Anforderung zur Anwendung von Tag-Daten durch das Tag-Zahlungssystem (500), wobei die aktualisierten NFC-Tag-Daten die Betragsdaten enthalten, während die originalen NFC-Tag-Daten die Betragsdaten nicht enthalten;
Speichern der individuellen Auftragsnummer durch das Tag-Zahlungssystem (500); und
Setzen des Zahlungsstatus für die individuelle Auftragsnummer auf den Status "Unbezahlt" durch das Tag-Zahlungssystem (500);
Empfangen der aktualisierten NFC-Tag-Daten durch das Tag-Aufnahmeterminal (200);
Erzeugen eines aktualisierten NFC-Tags auf Basis der aktualisierten NFC-Tag-Daten durch die Mikrocontroller-Einheit (220) des Tag-Aufnahmeterminals (200), wobei der aktualisierte NFC-Tag die Betragsdaten enthält;
Lesen (S8) des aktualisierten NFC-Tags durch das tragbare Zahlungsterminal (300);
Abschließen (S13) von Zahlungverarbeitung auf Basis des aktualisierten NFC-Tags durch das tragbare Zahlungsterminal (300); sowie
Ändern des Zahlungsstatus für die individuelle Auftragsnummer auf den Status "Zahlung erfolgt" durch das Tag-Zahlungssystem (500) unter der Bedingung, dass die Zahlung erfolgt ist.

2. Datenverarbeitungsverfahren nach Anspruch 1, das des Weiteren nach dem Schritt zum Lesen des aktualisierten Tags umfasst:
Abfragen zum Feststellen, ob die Zahlungsverarbeitung auf Basis des aktualisierten NFC-Tags durchgeführt wird, durch das Tag-Aufnahmeterminal (200) mittels Abfragen des Zahlungsstatus für die individuelle Auftragsnummer auf Basis der individuellen Auftragsnummer.

3. Datenverarbeitungssystem, implementiert auf Basis eines NFC-Tags, wobei es umfasst: eine externe Eingabevorrichtung (100), ein Tag-Aufnahmeterminal (200), ein tragbares Zahlungsterminal (400) sowie ein Tag-Zahlungssystem (500),
wobei die externe Eingabevorrichtung (100) so konfiguriert ist, dass sie eingegebene Betragsdaten erfasst und die Betragsdaten dem Tag-Aufnahmeterminal (200) bereitstellt, wobei das Tag-Aufnahmeterminal (200) umfasst:
ein NFC-Tag-Modul (210), das zum Speichern von NFC-Tag-Daten konfiguriert ist;
eine Mikrocontroller-Einheit (220), die so konfiguriert ist, dass sie eine individuelle Auftragsnummer zum Identifizieren einer Transaktion erzeugt, wobei ein Zahlungsstatus für die individuelle Auftragsnummer auf einen Status "Unbezahlt" gesetzt ist, wenn die Zahlung für die Transaktion offen ist, dass sie eine Anforderung zur Anwendung von Tag-Daten an das Tag-Zahlungssystem (500) auf Basis originaler NFC-Tag-Daten, der durch die externe Eingabevorrichtung (100) bereitgestellten Betragsdaten sowie der individuellen Auftragsnummer ausgibt und dass sie den NFC-Tag in dem NFC-Tag-Modul (210) auf Basis der von dem Tag-Zahlungssystem (500) bezogenen aktualisierten NFC-Tag-Daten aktualisiert, um einen aktualisierten NFC-Tag zu erzeugen, wobei die aktualisierten NFC-Tag-Daten die Betragsdaten enthalten, während die originalen NFC-Tag-Daten die Betragsdaten nicht enthalten,
wobei das Tag-Zahlungssystem (500) so konfiguriert ist, dass es die aktualisierten NFC-Tag-Daten entsprechend der Anforderung zur Anwendung von Tag-Daten von dem Tag-Aufnahmeterminal (200) erzeugt und die individuelle Auftragsnummer speichert und den Zahlungsstatus für die individuelle Auftragsnummer als einen Status "Unbezahlt" setzt und den Zahlungsstatus für die individuelle Auftragsnummer auf einen Status "Zahlung erfolgt" ändert, wenn die Zahlung für die der individuellen Auftragsnummer entsprechende Transaktion erfolgt ist,
wobei das tragbare Zahlungsterminal (400) so konfiguriert ist, dass es den aktualisierten NFC-Tag über den Tag-Aufnahmeterminal (200) liest und Zahlungsverarbeitung auf Basis des aktualisierten NFC-Tags abschließt.

4. Datenverarbeitungs-System nach Anspruch 3,
wobei das Tag-Aufnahmeterminal des Weiteren umfasst:
ein Abfrage-Modul (230), mit dem festgestellt wird, ob die Zahlungsverarbeitung auf Basis des aktualisierten NFC Tags durchgeführt wird, indem der Zahlungsstatus für die individuelle Auftragsnummer in dem Tag-Zahlungssystem (200) auf Basis der individuellen Auftragsnummer abgefragt wird.

5. Computerlesbares Medium, auf dem ein Computerprogramm gespeichert ist, wobei das Computerprogramm, wenn es von einem Prozessor ausgeführt wird, das Datenverarbeitungsverfahren nach einem der Ansprüche 1 oder 2 implementiert.

## Revendications

1. Procédé de traitement de données mis en œuvre sur la base d'une étiquette de communication en champ proche, étiquette (NFC), dans un système comprenant un dispositif d'entrée externe (100), un terminal de réception d'étiquette (200), un terminal de paiement portable (400) et un système de paiement par étiquette (500), dans lequel le terminal de réception d'étiquette (200) comprend une unité de microcontrôleur, (MCU) (220), et un module d'étiquette (NFC) (210) configuré pour stocker des données d'étiquette (NFC), ledit procédé comprenant :
acquérir (S1), par le dispositif d'entrée externe (100), des données de montant ;
fournir, par le dispositif d'entrée externe (100),les données de montant au terminal de réception d'étiquette (200) ;
générer, par l'unité de microcontrôleur (MCU) (220) du terminal de réception d'étiquette (200), un numéro de commande personnalisé pour identifier une transaction, dans lequel un état de paiement pour le numéro de commande personnalisé est défini comme étant un état « non payé » lorsque la transaction n'est pas payée, et est défini comme étant un état de paiement réussi une fois la transaction terminée ;
émettre (S2), par le terminal de réception d'étiquette (200) et à destination du système de paiement par étiquette (500), une demande d'application de données d'étiquette basée sur les données d'étiquette (NFC) d'origine, les données de montant acquises et le numéro de commande personnalisé ;
générer et répondre (S4), par le système de paiement par étiquette (500), des données d'étiquette (NFC) mises à jour basées sur la demande d'application de données d'étiquette, dans lequel les données d'étiquette (NFC) mises à jour incluent les données de montant alors que les données d'étiquette (NFC) d'origine n'incluent pas les données de montant ;
enregistrer, par le système de paiement par étiquette (500), le numéro de commande personnalisé ; et
définir, par le système de paiement par étiquette (500), l'état de paiement du numéro de commande personnalisé comme étant l'état « non payé » ;
recevoir, par le terminal de réception d'étiquette (200), les données d'étiquette (NFC) mises à jour ;
générer, par le (MCU) (220) du terminal de réception d'étiquette (200), une étiquette (NFC) mise à jour sur la base des données d'étiquette (NFC) mises à jour, dans lequel l'étiquette (NFC) mise à jour inclut les données de montant ;
lire (S8) l'étiquette (NFC) mise à jour par le terminal de paiement portable (300) ;
finaliser (S13), par le terminal de paiement portable (300), le traitement de paiement sur la base de l'étiquette (NFC) mise à jour ; et
modifier, par le système de paiement par étiquette (500), l'état de paiement du numéro de commande personnalisé pour le faire passer à l'état de paiement réussi, à condition que le paiement soit réussi.

2. Procédé de traitement de données selon la revendication 1, comprenant en outre, après l'étape de lecture de l'étiquette mise à jour :
une interrogation, par le terminal de réception d'étiquette (200), pour déterminer si le traitement de paiement sur la base de l'étiquette (NFC) mise à jour est effectué, en interrogeant l'état de paiement pour le numéro de commande personnalisé sur la base dudit numéro de commande personnalisé.

3. Système de traitement de données mis en œuvre sur la base d'une étiquette de communication en champ proche, étiquette (NFC), comprenant : un dispositif d'entrée externe (100), un terminal de réception d'étiquette (200), un terminal de paiement portable (400) et un système de paiement par étiquette (500),
le dispositif d'entrée externe (100) étant configuré pour acquérir des données de montant d'entrée et pour fournir les données de montant au terminal de réception d'étiquette (200),
le terminal de réception d'étiquette (200) comprenant :
un module d'étiquette (NFC) (210) configuré pour stocker des données d'étiquette (NFC) ;
une unité de microcontrôleur, (MCU) (220), configurée pour générer un numéro de commande personnalisé pour identifier une transaction, dans lequel un état de paiement pour le numéro de commande personnalisé est défini comme étant un état « non payé » lorsque la transaction n'est pas payée, pour émettre une demande d'application de données d'étiquette vers le système de paiement par étiquette (500) sur la base des données d'étiquette (NFC) d'origine, des données de montant prévues par le dispositif d'entrée externe (100) et du numéro de commande personnalisé, et de mettre à jour l'étiquette (NFC) dans le module d'étiquette (NFC) (210) sur la base des données d'étiquette (NFC) mises à jour acquises auprès du système de paiement par étiquette (500) pour générer une étiquette (NFC) mise à jour, dans lequel l'étiquette (NFC) mise à jour inclut les données de montant, et dans lequel les données de l'étiquette (NFC) mise à jour inclut les données de montant alors que les données de l'étiquette (NFC) d'origine n'incluent pas les données de montant
le système de paiement par étiquette (500) étant configuré pour générer les données de l'étiquette (NFC) mise à jour selon la demande d'application des données d'étiquette provenant du terminal de réception d'étiquette (200) et pour enregistrer le numéro de commande personnalisé, et pour définir l'état de paiement du numéro de commande personnalisé comme étant un état « non payé » ; et à modifier l'état de paiement du numéro de commande personnalisé en un état de paiement réussi lorsque la transaction correspondant au numéro de commande personnalisé est payée avec succès,
le terminal de paiement portable (400) étant configuré pour lire l'étiquette (NFC) mise à jour à partir du terminal de réception d'étiquette (200) et pour achever le traitement de paiement sur la base de l'étiquette (NFC) mise à jour.

4. Système de traitement de données selon la revendication 3, dans lequel le terminal de réception d'étiquette comprend en outre :
un module d'interrogation (230) destiné à déterminer si le traitement de paiement sur la base de l'étiquette (NFC) mise à jour est effectué en interrogeant l'état de paiement du numéro de commande personnalisé dans le système de paiement par étiquette (200) sur la base du numéro de commande personnalisé.

5. Support lisible par ordinateur ayant stocké sur celui-ci un programme informatique, dans lequel,
le programme informatique, lorsqu'il est exécuté par un processeur, met en œuvre le procédé de traitement de données selon l'une quelconque des revendications 1 ou 2.
